Europäisches Patentamt

European Patent Office

Office européen des brevets

(11) Publication number: **0 540 228 A1**

(12) **EUROPEAN PATENT APPLICATION**

(21) Application number: **92309605.1**

(22) Date of filing: **21.10.92**

(51) Int. Cl.[5]: **C01F 7/32,** C01F 7/00,
B01J 23/40, B01J 37/08,
C01F 17/00

(30) Priority: **26.10.91 GB 9122788**

(43) Date of publication of application:
**05.05.93 Bulletin 93/18**

(84) Designated Contracting States:
**AT BE CH DE DK ES FR GB GR IE IT LI NL PT SE**

(71) Applicant: **JOHNSON MATTHEY PUBLIC LIMITED COMPANY**
**78 Hatton Garden**
**London, WC1N 8JP (GB)**

(71) Applicant: **PANATAM PTY LIMITED**
**25 Bolton Street**
**Newcastle NSW 2300 (AU)**

(72) Inventor: **Trimm, David Lawrence**
**17 Robertson Place**
**Watsons Bay, NSW 2030 (AU)**

(74) Representative: **Brewer, Leonard Stuart et al**
**Patents Department Johnson Matthey**
**Technology Centre Blounts Court Sonning Common**
**Reading Berkshire RG4 9NH (GB)**

(54) **Alumina-containing catalyst, method for the preparation thereof and internal combustion engine exhaust system containing said catalyst.**

(57)  Alumina prepared by the thermal decomposition of aluminium sulphate is useful in a catalyst at a temperature above 850°C, especially for the treatment of the exhaust gas from an internal combustion engine to combat air pollution. Alumina prepared in this way advantageously contains dopant which improves the retention of the surface area of the alumina on exposure to a temperature of 850°C or above. Gibbsite is the preferred raw material from which to prepare the aluminium sulphate.

EP 0 540 228 A1

This invention relates to improvements in or modifications of alumina prepared by the thermal decomposition of aluminium sulphate.

Alumina is much used in catalysts. It can be employed as catalytically active material, as washcoat on which catalytically active material is carried, or as ultimate support for catalytically active material.

Particularly important is the use of alumina as washcoat in a catalyst for the treatment of the exhaust gas from an internal combustion engine to combat air pollution by converting, in the exhaust gas, nitrogen oxides to nitrogen, carbon monoxide to carbon dioxide, and hydrocarbons to carbon dioxide and water. The washcoat provides a high surface area to carry the catalytically active material.

In some of its uses in catalysts, including those for the treatment of the exhaust gas from an internal combustion engine, the alumina has to withstand severe operating conditions. The surface area of alumina tends to reduce markedly at high temperatures. In other uses, the alumina is employed at a lower temperature but can nevertheless be exposed to a higher temperature for a period of time, which impairs its utility in operation at the lower temperature.

There are many ways to prepare alumina, and much research has been done with a view to providing alumina whose surface area is thermally stable.

The present invention relates to alumina prepared by the thermal decomposition of aluminium sulphate. The preparation of alumina in this way is little known. However, United Kingdom patent specification 1537981 discloses obtaining alumina from alumina-bearing material by a certain process involving thermal sulphatising of the material, crystallising aluminium sulphate and decomposing the crystallised aluminium sulphate by heat to aluminium oxide. The Derwent abstract of Japanese patent specification 58035126 refers to the preparation of isobutylene by reacting ethyl tert-butyl ether in the presence of solid acid catalyst which can be aluminium sulphate or a catalyst obtained by thermally decomposing aluminium sulphate carried on silica.

It has now been discovered that alumina prepared by the thermal decomposition of aluminium sulphate has properties making it surprisingly useful in a catalyst subjected to a high temperature. In particular, it has been discovered that the surface area of alumina prepared in this way is outstandingly thermally stable, making the alumina surprisingly useful in catalytic reactions where temperatures are so high, say above 850°C, as would be expected to impair the surface area. In addition, it has been discovered that incorporating into this alumina dopant which improves the retention of the surface area of the alumina on exposure to a high temperature, say 850°C, is remarkably effective. Furthermore, it has been discovered that preparing alumina in this way is surprisingly susceptible to employing as raw material the cheap material gibbsite.

Accordingly, the invention provides alumina prepared by the thermal decomposition of aluminium sulphate, which alumina contains dopant which improves the retention of the surface area of the alumina on exposure to a temperature of 850°C.

The invention provides also a process for preparing this doped alumina, which process comprises admixing the dopant or precursor thereof with the alumina or precursor thereof, and in the case of any precursor, converting it to the dopant or alumina.

The invention also provides a process for preparing alumina by the thermal decomposition of aluminium sulphate wherein the aluminium sulphate has been prepared by reacting gibbsite with sulphuric acid to form hydrated aluminium sulphate and this is heated to dehydrate it to the aluminium sulphate.

The invention provides also a catalyst comprising the present alumina, ie that containing the dopant or prepared by a process according to the invention.

The invention also provides an internal combustion engine whose exhaust system contains a catalyst which contains as washcoat alumina prepared by the thermal decomposition of aluminium sulphate.

The invention provides also a method of conducting a catalytic reaction employing a catalyst comprising alumina prepared by the thermal decomposition of aluminium sulphate, in which method the alumina is at a temperature above 850°C.

In the preparation of alumina by the thermal decomposition of aluminium sulphate, the thermal decomposition is usually effected at a temperature of at least 500°C, especially at a temperature of 800-1000°C. Preferably, the alumina is prepared by heating hydrated aluminium sulphate to dehydrate it and decompose it to alumina. The hydrated aluminium sulphate can be prepared from any appropriate aluminium salt, for example aluminium nitrate, but is preferably prepared by reacting aluminium oxide or hydroxide, for example gibbsite or boehmite, but particularly gibbsite, with sulphuric acid. The dehydration is usually effected at a temperature of at least 300°C, for instance at least 600°C. The dehydration and decomposition can be effected in a single stage. In a particular embodiment, however, the dehydration is effected in a separate stage to the decomposition.

Use of gibbsite is a particularly advantageous feature of the present invention, because gibbsite is a readily available, and hence cheap, raw material. Being able to make a temperature-stable alumina from it by simply converting it to hydrated aluminium sulphate and then decomposing is surprising, since other ways of preparing

EP 0 540 228 A1

temperature-stable alumina from it are much more complex.

In an aspect of the present invention, alumina prepared by the decomposition of aluminium sulphate contains dopant which improves the retention of the high surface area of the alumina on exposure to a temperature of 850°C. The doped alumina has a surface area of particularly good thermal stability. The retention of the high surface area will be evident at other temperatures besides 850°C, but 850°C is employed here for precision in defining the dopant. The doped alumina can be prepared by admixing the dopant or precursor thereof with the alumina or precursor thereof, and in the case of any precursor, converting it, usually by heating, to the dopant or alumina. Usually dopant precursor is employed. The dopant or precursor can be admixed with an alumina precursor, eg gibbsite, before conversion of that precursor to aluminium sulphate or hydrated aluminium sulphate, but this is not preferred. It is surprisingly effective to prepare the alumina by heating hydrated aluminium sulphate to dehydrate and decompose it, and admix the dopant or precursor thereof with the hydrated aluminium sulphate or with aluminium sulphate in aqueous solution which is used to make the hydrated aluminium sulphate or subsequently. For instance, the dopant or precursor can be admixed with the alumina obtained by the decomposition. When the dehydration of hydrated aluminium sulphate is effected in a different stage to the decomposition, the dopant or precursor thereof can be admixed after the dehydration stage but before the decomposition stage. Thus, hydrated aluminium sulphate can be heated to dehydrate it to aluminium sulphate, the dopant or precursor thereof admixed with the aluminium sulphate and the mixture heated to decompose the aluminium sulphate to alumina and convert any precursor to the dopant. To avoid interrupting the heating process, however, it is preferred to admix the dopant or precursor with the hydrated aluminium sulphate, or less preferably with aluminium sulphate in aqueous solution which is then converted to the hydrated aluminium sulphate.

The dopant can be selected from those known in themselves for alumina stabilisation. The present dopant may comprise at least one oxide of the group consisting of alkaline earth metal oxides (for instance BaO, CaO, SrO and MgO) and transition metal oxides (for instance $Y_2O_3$, $La_2O_3$ and lanthanide metal oxides for instance $CeO_2$, $PrO_2$, $Nd_2O_3$ and $Sm_2O_3$ ). The oxides can be present as such or as components of mixed oxides. Of particular interest are the cation-substituted barium hexa-aluminates of formula $BaMAl_{11}O_{19}$-$\alpha$ (M=Cr, Mn, Fe, Co, Ni preferably Mn). Preferably, the dopant is lanthanum oxide or barium oxide, and the dopant precursor is lanthanum or barium compound which during the decomposition stage decomposes to the lanthanum oxide or barium oxide.

The dopant, usually metal oxide, is usually employed in an amount of 1-25, preferably 1-10, wt% of the alumina.

The present alumina is preferably uniform throughout rather than having only a surface layer prepared by the thermal decomposition of aluminium sulphate.

The present alumina, ie that containing the dopant or prepared by a process according to the invention, is surprisingly useful in catalysts, especially at high temperatures, in this specification taken to be temperatures above 850°C. For instance, catalysts comprising it can be exposed to a high temperature and yet retain their catalytic activity for use in a catalytic reaction at a lower temperature, typically 250-600°C. Preferably, however, the catalyst is used in a catalytic reaction at a temperature above 850°C. The temperature can be for instance above 880°C; usually it is between 850° and 1100°C, for instance between 880° and 1100°C. In a particular embodiment, however, it is between 850° and 1200°C, for instance between 880° and 1200°C.

The surface area of the alumina has remarkably good thermal stability. Thus, the alumina is particularly useful in a method wherein the alumina is held at a temperature above 850°C for a long total time, for instance at least 1,000 hours; the total time can be 1,000-20,000, especially 1,000-10,000 hours. The catalyst is usually operated intermittently, and can be subjected to many temperature cycles in which it is heated and then allowed to cool to ambient temperature.

The alumina usually has a surface area of at least 50 square metres per gram, preferably at least 90 square metres per gram. Surface areas specified herein are as measured by the Brunauer Emmett Teller technique. The thermal stability of alumina can be measured by a standard soak test. In one of these, 1-5g of a sample is placed in a vessel in an air oven which is then heated to the desired temperature, held for four hours, and then cooled and its surface area measured. The test can be conducted in an oven with following gas if preferred. The present alumina is preferably such that when subjected to this soak test at 1200°C, it is found to have a surface area of at least 50, preferably at least 90, square metres per gram.

The alumina can be employed in ways known for other aluminas in catalysts.

The alumina can be employed as catalytically active material, as washcoat to provide a high surface area on which to carry catalytically active material, or as ultimate support for catalytically active material.

The alumina is preferably employed as a washcoat or support in the present method which is employed to combat air pollution from exhaust gas. The exhaust gas can be from an industrial process, for instance from evaporating off solvent, for example in a print drying unit. Preferably, however, the exhaust gas is from a sta-

3

tionary or mobile power source, for example a gas turbine or an internal combustion engine. Catalysts containing the alumina for these uses usually contain as catalytically active material one or more platinum group metals, especially platinum or palladium. For instance, the material can be platinum; palladium; platinum and rhodium; palladium and rhodium; or platinum, palladium and rhodium; any of these optionally being together with one or more base metals. The alumina can also be employed as catalytically active material for catalytically stabilised combustion.

The present method is outstandingly useful where the catalytic reaction is catalytic combustion, especially the reaction, on a catalyst having the alumina as washcoat, of the exhaust gas from an internal combustion engine, particularly a vehicle internal combustion engine, to convert nitrogen oxides to nitrogen, carbon monoxide to carbon dioxide, and hydrocarbons to carbon dioxide and water. The catalyst preferably contains a honeycomb-shaped support, which can be metal or ceramic. On the alumina is preferably platinum and rhodium.

Similarly, alumina prepared by the thermal decomposition of aluminium sulphate is surprisingly useful in catalysts at a temperature above 850°C, even where that alumina is not the present alumina, ie is not that containing the dopant or that prepared by a process according to the invention. This method of use and engines whose exhaust systems contain the catalyst are as described above in relation to the catalyst containing the present alumina.

The invention is illustrated by the following Examples.

## Example 1

Undoped Alumina

0.500kg of high purity gibbsite (aluminium trihydroxide) was mixed with 1. 150kg of distilled water in a 3 litre beaker, and then 0.965kg 98% sulphuric acid (analytical purity) was added slowly to the mixture while it was being stirred on a magnetic stirrer. Precaution was taken not to bring the mixture to the boil.

The mixture was kept stirred for a further ten minutes after all the sulphuric acid had been added, and then the beaker was moved on to a hotplate. The content of the beaker was kept gently boiling until it became a very clear and sticky solution.

The solution was then poured down into an aluminium mould. After it had cooled down, the solid white material was broken down into smaller slices (about 18 pieces). One piece of the solid was transferred into a big crucible each time and put into a muffle furnace which had been pre-heated to approximately 600°C, and calcined for two hours.

After the calcination, the crucible was taken out of the furnace and cooled down to room temperature. The foam-like material in the crucible was then powdered and stored in an air-tight container.

100g of powder was placed in a silica furnace tube and was heated gently from room temperature to 800°C. Then slowly the temperature was increased to 940°C at 200°C/hour, and kept at that temperature for about 1.5 hours, until no more fume came out. The exhaust fume was trapped with 70% sulphuric acid solution and 20% NaOH solution in a set of bubblers.

The powder in the furnace was then cooled down to room temperature and stored in a container, ready for use as a catalyst washcoat for high temperature applications.

In a soak test, the powder was calcined for one hour at 1000°C, after which its surface area was found to be $120m^2g^{-1}$.

## Example 2

Lanthanum-doped Alumina (2% $La_2O_3$ in $Al_2O_3$)

The 600°C calcined powder from Example 1 was used as the precursor for making lanthanum doped alumina. 5.0g of the powder from the air-tight container was placed in a crucible and 3.6ml of lanthanum nitrate solution containing 0.080g of $La(NO_3)_3,6H_2O$ was added to the crucible and mixed with the powder to form a thick paste. The paste was then dried for one hour in a muffle furnace pre-heated to 250°C, and calcined at 1000°C for one hour. The calcination was carried out in a fume cupboard because sulphur trioxide was produced during the process.

The content of the crucible was powdered after being cooled down to room temperature, and stored in a container.

In a soak test, the product was calcined for four hours at 1000°C, after which its surface area was found to be $115m^2g^{-1}$. In another soak test, the product was calcined for four hours at 1200°C, after which its surface area was found to be $62m^2g^{-1}$.

### Example 3

Barium-doped Alumina (4% BaO in $Al_2O_3$)

The procedure of Example 2 was followed except that the precursor powder was mixed with 3.6ml of barium nitrate solution containing 0.103g of $Ba(NO_3)_2$, instead of with the lanthanum nitrate solution.

In a soak test, the product was calcined for four hours at 1000°C, after which its surface area was found to be $108m^2g^{-1}$. In another soak test, the product was calcined for four hours at 1200°C, after which its surface was found to be $67m^2g^{-1}$.

### Example 4

Lanthanum-doped Alumina (4% $La_2O_3$ in $Al_2O_3$)

The procedure of Example 2 was followed except that twice as much of the lanthanum nitrate was used.

In a soak test, the product was calcined for four hours at 1000°C, after which its surface area was found to be $74m^2g^{-1}$. In another soak test, the product was calcined for four hours at 1200°C, after which its surface area was found to be $50m^2g^{-1}$.

### Examples 5-11

Experiments were conducted using aluminium hydroxide or aluminium oxide. A small amount of the aluminium hydroxide or aluminium oxide was placed in a mortar. A thick paste was formed by crushing the aluminium hydroxide or oxide with a pestle while kneading in sulphuric acid (98%), except for Example 8, where the crushing was omitted and the sulphuric acid mixed in using a stainless steel spatula. The paste was allowed to stand in air for the standing time specified in the Table below. The paste was then transferred to a porcelain boat and calcined. Calcination was performed in a gold-lined furnace, under an air purge except for Example 8, for the times and at the temperatures specified in the Table. Following calcination, the product was allowed to cool and then crushed to form a powder.

The alumina starting material in Example 11 was prepared by calcining gibbsite at 850°C for ten minutes under an air purge in a gold-lined furnace.

In the Table, 'Fresh' product refers to the powder obtained by crushing the calcined paste product, and 'Residual' product refers to the alumina obtained by heating the fresh product in a muffle furnace at 1000°C for four hours.

The surface areas were measured by nitrogen adsorption at -195°C using a Micrometrics 2200 rapid analyser. X-ray diffraction analysis was performed, using a Rigaku Geiger Diffractomer employing $CuK_\gamma$ radiation at 35kV and 25mA, on the fresh product of Example 5 and revealed the presence of aluminium sulphate. However, the corresponding residual product was found by X-ray diffraction to be alumina.

## Table

| Example | Starting Material | Standing Time (min) | Calcination Time (min) | Temp °C | Product Surface Area ($m^2 g^{-1}$) Fresh | Residual |
|---|---|---|---|---|---|---|
| **Gibbsite** | | | | | | |
| 5 | Sumitomo CHP-140L | 20 | 10 | 820 | 91 | 97 |
| 6 | Nippon BHP-39 | 20 | 10 | 820 | 90 | 92 |
| 7 | Alcoa * | 20 | 10 | 820 | 61 | 66 |
| 8 | Alcoa * | 81 | 28 | 817 | 37 | 59 |
| **Pseudoboehmite** | | | | | | |
| 9 | Pural 200 | 29 | 12 | 819 | 3 | 149 |
| **Alumina** | | | | | | |
| 10 | Vista Washcoat | 24 | 10 | 817 | 4 | 108 |
| 11 | Calcined Alcoa Gibbsite | 25 | 5 | 800 | 4 | 61 |

* Alcoa gibbsite is less pure gibbsite and is obtained from the company Alcoa in Australia.

**Example 12**

An exhaust catalyst for a vehicle internal combustion engine was prepared in a way conventional in itself using the alumina product of Example 5 as washcoat. Platinum and rhodium were employed as catalytically active material at a weight ratio of 7:1 and a total loading of 20g/cu ft (706g/m³). The catalyst was given an accelerated ageing for 45 hours at 1050°C. Tests conducted according to the United States of America Federal Test Procedure were conducted on a Honda Civic vehicle, and gave the following results:

| % Conversion | | |
|---|---|---|
| Hydrocarbon | CO | $NO_x$ |
| 79.5 | 71.1 | 76.6 |

**Example 13**

Precursor

0.100kg of Alcoa gibbsite (at 98.7% aluminium trihydrate) was mixed with 0.202kg of water in a 3L beaker. 0.1945kg of sulphuric acid at 98% were added in 10 minutes while stirring with a teflon-coated magnetic stirrer. The mixture boiled gently during the $H_2SO_4$ introduction.

After all the acid had been added, the hot plate of the stirrer was used to maintain a gentle boiling (120-122°C), for 20 more minutes, by which time the solution was free from solids and fairly viscous.

The solution was then poured into a compartmented aluminium mould. After cooling, the solid (hydrated aluminium sulphate) now in small prisms, was placed in a porcelain crucible and dried overnight at 160-180°C. The resulting foamy material was powdered and kept in a tight container.

### Example 14

Lanthanum-doped alumina (2% moles $La_2O_3$ mole $Al_2O_3$)

The precursor dried at 180°C (Example 13) was used in the present experiment.

To 10g of the precursor, placed in a porcelain crucible, were added 0.425g of $La(Na_3)_3,6H_2O$ and 20ml of water. The paste so formed was stirred for 5 minutes with a Pyrex rod, then calcined for 2 hours at 1000°C.

After cooling, the doped alumina was ground. Its surface area was measured and the result was $98.7m^2/g^{-1}$.

After soaking at 1200°C during 4 hours, the alumina had a surface area of $78.2m^2/g^{-1}$.

Surface areas specified in this Example and hereafter are as measured by nitrogen adsorption at -195°C using a Micrometrics 2200 rapid analyser.

### Example 15

Barium-doped alumina (4 % moles $BaO$/mole $Al_2O_3$)

The procedure of Example 14 was followed, replacing lanthanum with barium nitrate.

To 10g of the precursor of Example 13, 0.256g of $Ba(NO_3)_2$ was added as a solution in 20ml of water.

After calcining the product at 1000°C for 2 hours, the surface area was found to be $128.4m^2/g^{-1}$ and following a soak at 1200°C for 4 hours, the surface area decreased to $105.8m^2/g^{-1}$.

### Example 16

Lanthanum-doped alumina (2 % moles $La_2O_3$/mole $Al_2O_3$)

To 8g of Alcoa gibbsite (at 98.7% aluminium trihydrate) were added 16g of water. 15.6g of concentrated sulphuric acid at 98% purity were introduced in 10 minutes while the reactants were stirred using a hot plate magnetic stirrer.

A gentle boiling was maintained with the hot plate throughout the reaction time of 30 minutes.

At the end of this time, 0.885g of $La(NO_3)_3,6H_2O$, dissolved in 10ml of water, were added to the sulphate solution and the stirring maintained for another 5 minutes.

The resulting solution was then poured into a porcelain dish and placed in a muffle furnace which was heated to 1000°C in 2 hours and soaked at this temperature for 4 hours.

The alumina so treated had a surface area of $110.9m^2/g^{-1}$.

After a soak of 4 hours at 1200°C, its surface area decreased to $95.0m^2/g^{-1}$.

### Example 17

Lanthanum-doped alumina (2% moles $La_2O_3$/mole $Al_2O_3$)

The procedure of Example 16 was used for the reaction gibbsite/sulphuric acid, but the Alcoa gibbsite was, first of all, washed in warm water at about 50-60°C, in order to eliminate as much as possible the residual $Na_2O$ present as impurity (0.3% in average).

To do this, 50g of Alcoa gibbsite were stirred in 200ml of warm water for 5 minutes in a beaker. The contents were then filtered under vacuum until only interstitial water was left (approximately 2%). The gibbsite was then dried.

10g of the previously treated gibbsite were placed in a beaker, together with 20g of water. 19.5g of concentrated sulphuric acid at 98% were introduced in 10 minutes under stirring.

Gentle boiling was maintained for 30 minutes.

At the end of this reaction time, 1.095 g of $La(NO_3)_3$, $6H_2O$, dissolved in 10ml water, were added to the sulphate solution and stirring maintained another 5 minutes.

The reaction products were then poured into a porcelain dish and placed in a muffle furnace. The temperature was made to rise to 1000°C in 2 hours. The soaking lasted 4 hours at 1000°C.

The doped alumina thus obtained had a surface area of $124.8m^2/g^{-1}$.

Soaking the alumina at 1200°C for 4 hours decreased its surface area to $88.6m^2/g^{-1}$.

### Example 18

Barium-doped alumina (4 % moles BaO/mole $Al_2O_3$)

The procedure was that adopted in Example 17 except for replacing lanthanum with barium nitrate.

To 10g of the previously washed and dried Alcoa gibbsite, were added 20ml of water. 19.5g of concentrated sulphuric acid were made to react with this suspension and after 30 minutes, 0.661g of $Ba(NO_3)_2$ dissolved in 10ml of water were added and stirring maintained another 5 minutes.

The sulphate was then poured into a porcelain dish, and heat treated as in Example 17.

The doped alumina had a surface area of 114.0$m^2/g^{-1}$. After soaking at 1200°C for 4 hours, it had decreased to 101.4$m^2/g^{-1}$.

### Example 19

In a similar way to the preceding Examples, the following Example was performed:

Gibbsite was mixed with lanthanum nitrate. Sulphuric acid was added and reaction allowed to proceed. The product was calcined at 600°C for 1 hour. The product was calcined for 4 hours.

The surface areas were:

| Calcined at °C | $m^2g^{-1}$ |
|---:|---:|
| 900 | 111 |
| 1000 | 90 |
| 1100 | 36 |

### Example 20

In a similar way to the preceding Examples, the following Example was performed:

Gibbsite was converted to the hydrated sulphate and dried at 180°C. Dopant was added. (Lanthanum nitrate to give 2% $La_2O_3$.) The material was calcined at 1000°C for 2 hours. The surface area was, after the defined calcinations:

| 1000°C (2 hours) | 99 $m^2g^{-1}$ |
|---|---|
| 1200°C (4 hours) | 78 $m^2g^{-1}$ |

### Example 21

In a similar way to the preceding Examples, the following Example was performed:

Alumina was prepared from aluminium sulphate by calcining for 4 hours at 1000°C. Lanthanum nitrate was added to give 2%$La_2O_3$.

Calcining at 1000°C gave 120$g^2m^{-1}$. Calcining at 1200°C for 4 hours gave 90$m^2g^{-1}$.

### Example 22

This Example compares the present alumina, prepared by the thermal decomposition of aluminium sulphate as described in previous Examples, with two commercial aluminas, namely Comparative Alumina A - γ alumina from Norton, and Comparative Alumina B - y alumina used in washcoats and obtained from Johnson Matthey, Australia.

The comparisons were performed with and without dopant. The dopant was 2%$La_2O_3$.

The surface area, in $m^2g^{-1}$, after calcination at 1200°C for 4 hours, was found to be as follows:

|  | Present Alumina | Comparative Alumina A | Comparative Alumina B |
|---|---|---|---|
| No dopant | 19 | 12 | 6 |
| Dopant | 72 | 38 | 30 |

## Claims

1. Alumina prepared by the thermal decomposition of aluminium sulphate, characterised in that the alumina contains dopant which improves the retention of the surface area of the alumina on exposure to a temperature of 850°C.

2. Alumina according to claim 1 characterised in that the dopant is lanthanum oxide or barium oxide.

3. A process for preparing alumina claimed in claim 1 or 2, which process is characterised by admixing the dopant or precursor thereof with the alumina or precursor thereof, and in the case of any precursor, converting it to the dopant or alumina.

4. A process according to claim 3 characterised in that the alumina is prepared by heating hydrated aluminium sulphate to dehydrate and decompose it, and the dopant or precursor thereof is admixed with the hydrated aluminium sulphate or with aluminium sulphate in aqueous solution which is used to make the hydrated aluminium sulphate or subsequently.

5. A process according to claim 4 characterised in that dopant precursor is employed and this is lanthanum compound or barium compound which during the heating decomposes to lanthanum oxide or barium oxide.

6. A process according to claim 4 or 5 characterised in that the decomposition to alumina is effected at a temperature of at least 500°C.

7. A process according to any one of claims 4-6 characterised in that the dehydration is effected at a temperature of at least 300°C.

8. A process according to any one of claims 4-7 characterised in that the hydrated aluminium sulphate has been prepared by reacting gibbsite with sulphuric acid.

9. A process for preparing alumina by the thermal decomposition of aluminium sulphate characterised in that the aluminium sulphate has been prepared by reacting gibbsite with sulphuric acid to form hydrated aluminium sulphate and this is heated to dehydrate it to the aluminium sulphate.

10. A process according to claim 9 characterised in that the thermal decomposition is effected at a temperature of at least 500°C.

11. A process according to claim 9 or 10 characterised in that the dehydration is effected at a temperature of at least 300°C.

12. A catalyst comprising alumina characterised in that the alumina is as claimed in claim 1 or 2 or prepared by a process claimed in any one of claims 3-11.

13. A catalyst according to claim 12 characterised in that the alumina is of surface area at least 50 square metres per gram as measured by the Brunauer Emmett Teller technique.

14. A catalyst according to claim 12 or 13 characterised in that it contains the alumina as washcoat.

15. A catalyst according to claim 14 characterised in that it is for the catalytic reaction of the exhaust gas from an internal combustion engine to convert nitrogen oxides to nitrogen, carbon monoxide to carbon dioxide, and hydrocarbons to carbon dioxide and water.

16. A catalyst according to claim 15 characterised in that it contains platinum or palladium on the alumina.

17. A catalyst according to claim 16 characterised in that it contains platinum and rhodium on the alumina.

18. A method of conducting a catalytic reaction employing a catalyst comprising alumina prepared by the thermal decomposition of aluminium sulphate, which method is characterised by employing the alumina at a temperature above 850°C.

19. A method according to claim 18 characterised in that the alumina is held at the temperature above 850°C for a total time of at least 1000 hours.

20. A method according to claim 18 or 19 characterised in that the catalyst is as claimed in any one of claims 12-17.

21. A method according to any one of claims 18-20 characterised in that the catalytic reaction is catalytic combustion.

22. A method according to claim 21 characterised in that the catalyst is as claimed in any one of claims 15-17, and the catalytic reaction is of the exhaust gas from an internal combustion engine to convert nitrogen oxides to nitrogen, carbon monoxide to carbon dioxide, and hydrocarbons to carbon dioxide and water.

23. A method according to claim 22 characterised in that the engine is that of a vehicle.

24. An internal combustion engine whose exhaust system contains a catalyst characterised in that the catalyst is as claimed in any one of claims 15-17 or contains as washcoat alumina prepared by the thermal decomposition of aluminium sulphate.

25. An engine according to claim 24 characterised in that it is of a vehicle.

**European Patent Office**

# EUROPEAN SEARCH REPORT

Application Number

EP 92 30 9605

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 171 160 (ETHYL CORPORATION)<br><br>* page 1, line 1 - line 23 *<br>* page 2, line 14 - page 4, line 13 *<br>* page 5, line 17 - line 32 *<br>* claims 1-5,7,10,11; example 16 * | 1-6,12,<br>18,21-25 | C01F7/32<br>C01F7/00<br>B01J23/40<br>B01J37/08<br>C01F17/00 |
| A | IDEM<br>--- | 16,17 | |
| P,X | EP-A-0 464 627 (SUMIMOTO CHEMICAL COMPANY LTD.)<br><br>* page 1, line 1 - line 16 *<br>* page 3, line 6 - page 5, line 2 *<br>* page 6, line 30 - line 35 *<br>* claims; examples * | 1-6,<br>12-18,<br>21-25 | |
| A | US-A-3 265 464 (J.C.UDD)<br>* column 2, line 36 - column 3, line 11 *<br>* claims; example 1 *<br>--- | 1,4,6 | |
| A | WO-A-8 002 137 (BOLIDEN AKTIENBOLAG)<br>* page 1, line 7 - page 2, line 7 *<br>* claim 1 * | 9 | **TECHNICAL FIELDS SEARCHED (Int. Cl.5)**<br><br>C01F<br>B01J |

The present search report has been drawn up for all claims

| Place of search | Date of completion of the search | Examiner |
|---|---|---|
| THE HAGUE | 01 FEBRUARY 1993 | VAN DER POEL W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)